# EUROPÄISCHE PATENTANMELDUNG

(11) **EP 1 369 289 A1**
(43) Veröffentlichungstag der Anmeldung: **10.12.2003**
(21) Anmeldenummer: 03450106.4
(22) Anmeldetag: 30.04.2003
(51) Int. Cl.: B60M 1/26

(54) **Belastungsgewicht für Radspannwerke von Oberleitungen elektrischer Bahnen**

(30) Priorität: 06.06.2002 AT 36102 U
(71) Anmelder: Röhl, Hans Heinrich, 1120 Wien (AT)
(72) Erfinder: Röhl, Hans Heinrich, 1120 Wien (AT)
(74) Vertreter: Rippel, Andreas, Dipl.-Ing.

(57) **Zusammenfassung**

Ein Belastungsgewicht für Radspannwerke von Oberleitungen elektrischer Bahnen, mit einer mittleren Gewichtsaufhängestange (1), besteht aus einem Wickelfalzrohr (5), das durch einen Boden (4) verschlossen ist, an dem die Gewichtsaufhängestange (1) angreift, und das mit Schüttgut wenigstens teilweise gefüllt ist.

Dadurch wird ein einfaches Belastungsgewicht geschaffen.

## Beschreibung

Die Erfindung bezieht sich auf ein Belastungsgewicht für Radspannwerke von Oberleitungen elektrischer Bahnen, mit einer mittleren Gewichtsaufhängestange.

Um die Spannung elektrischer Oberleitungen von Bahnen aufrecht zu erhalten, sind Radspannwerke in Verwendung, bei denen die elektrische Oberleitung durch Belastungsgewichte in einem vorgegebenen Spannungszustand gehalten werden. Dabei wird die Oberleitung über ein isoliertes Seil auf ein Rad geführt, mit dem ein Rad größeren Durchmessers gekuppelt ist, an dem über ein Seil die Gewichtsaufhängestange hängt. An dieser Gewichtsaufhängestange sind Einzelgewichte befestigt, deren Summe das Belastungsgewicht bildet. Einzelgewichte bestehen aus Scheiben aus Rüttelbeton, die mit einem Schlitz versehen sind, um sie auf die Gewichtsaufhängestange aufschieben zu können. Die Scheiben sind durch einen Ring bewehrt und mit einer Hülle überzogen.

Die Herstellung derartiger Scheiben ist verhältnismäßig aufwendig und daher teuer.

Die Erfindung hat es sich zum Ziel gesetzt, ein Belastungsgewicht der eingangs genannten Art zu schaffen, das einfacher herzustellen und auch einfacher zu gebrauchen ist. Erreicht wird dies durch ein Wickelfalzrohr, das durch einen Boden verschlossen ist, an dem die Gewichtsaufhängestange angreift, und das mit Schüttgut wenigstens teilweise gefüllt ist.

Wickelfalzrohre werden allgemein in runden Luftkanalsystemen verwendet und sind infolge ihrer vielfachen Verwendung sehr preiswert. Die Menge des einzufüllenden Schüttgutes, die im wesentlichen das Gewicht des Belastungsgewichtes bestimmt, kann verhältnismäßig leicht variiert werden.

Als besonders zweckmäßig hat sich erwiesen, als Schüttgut Schrott zu verwenden. Schrott ist billig und ist leicht zu manipulieren.

Das Wickelfalzrohr kann oben offen sein, es ist jedoch vorteilhaft wenn es mit einem Deckel verschlossen ist.

Das Gewicht des Schüttgutes wird bei einem erfindungsgemäßen Belastungsgewicht von der Gewichtsaufhängestange und dem Boden aufgenommen. Das Wickelfalzrohr selbst nimmt nur die Seitenkräfte auf. Zur Verbindung des Bodens mit dem Wickelfalzrohr genügt daher eine Verbindung mittels Nieten.

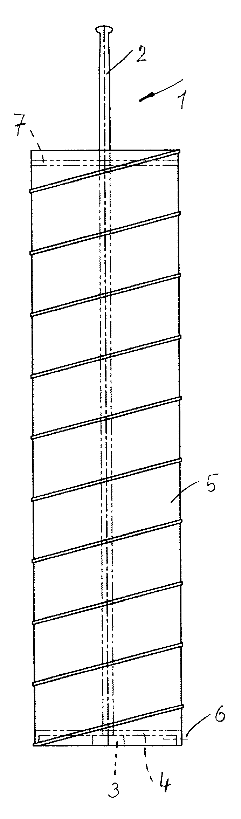

Nachstehend ist die Erfindung anhand eines in der Zeichnung dargestellten Ausführungsbeispieles näher beschrieben, ohne auf dieses Beispiel beschränkt zu sein. Dabei zeigt die einzige Figur ein erfindungsgemäßes Belastungsgewicht in Ansicht.

Das in der Zeichnung dargestellte Belastungsgewicht nach der Erfindung weist eine an sich bekannte Gewichtsaufhängestange 1 auf, die aus einer Knöppelstange 2 und einer damit verschweißten Tragscheibe 3 besteht. Auf der Tragscheibe 3 stützt sich ein Boden 4 ab. Dieser Boden 4 schließt ein Wickelfalzrohr 5 nach unten ab. Das Wickelfalzrohr 5 und der Boden 4 sind im gezeigten Ausführungsbeispiel durch Nieten 6 verbunden, deren eine in der Zeichnung durch ihre Mittellinie angedeutet ist.

Im Gebrauchszustand ist der durch das Wickelfalzrohr 5 und dem Boden 4 gebildete zylindrische Behälter mit einem Schüttgut, vorzugsweise Schrott, gefüllt, wobei dieser Behälter zweckmäßig durch einen Deckel 7 verschlossen ist. Die Menge des Schüttgutes richtet sich nach dem gewünschten Gewicht, das z.B. zwischen 3000N und 7000N variieren kann.

Durchmesser und Blechstärke des Wickelfalzrohres 5 können je nach den Anforderungen gewählt werden. Bei Versuchen hat sich ein Durchmesser zwischen 200mm und 300mm und eine Blechstärke von 1mm bewährt.

Im Rahmen der Erfindung sind zahlreiche Abänderungen möglich. So kann als Schüttgut ein anderes Gut als Schrott gewählt werden, es ist die Verbindung von Wickelfalzrohr 5 und Boden 4 auch durch andere Verbindungsmittel als Nieten möglich usw..

## Patentansprüche

1. Belastungsgewicht für Radspannwerke von Oberleitungen elektrischer Bahnen, mit einer mittleren Gewichtsaufhängestange (1), **gekennzeichnet durch** ein Wickelfalzrohr (5), das **durch** einen Boden (4) verschlossen ist, an dem die Gewichtsaufhängestange (1) angreift, und das mit Schüttgut wenigstens teilweise gefüllt ist.

2. Belastungsgewicht nach Anspruch 1, **dadurch gekennzeichnet, daß** das Schüttgut Schrott ist.

3. Belastungsgewicht nach Anspruch 1 oder 2, **dadurch gekennzeichnet, daß** das Wickelfalzrohr (5) mit einem Deckel (7) verschlossen ist.

4. Belastungsgewicht nach einem der Ansprüche 1 bis 3, **dadurch gekennzeichnet, daß** der Boden (4) mit dem Wickelfalzrohr (5) mittels Nieten (6) verbunden ist.
